Europäisches Patentamt

European Patent Office

Office européen des brevets

(11) Veröffentlichungsnummer : **0 337 071 B1**

(19)

(12) ## EUROPÄISCHE PATENTSCHRIFT

(45) Veröffentlichungstag der Patentschrift :
19.08.92 Patentblatt 92/34

(21) Anmeldenummer : **89102396.2**

(22) Anmeldetag : **11.02.89**

(51) Int. Cl.$^5$ : **B60H 1/24**

(54) **Klappe für eine Be- oder Entlüftungsöffnung.**

(30) Priorität : **14.04.88 DE 3812346**

(43) Veröffentlichungstag der Anmeldung :
**18.10.89 Patentblatt 89/42**

(45) Bekanntmachung des Hinweises auf die
Patenterteilung :
**19.08.92 Patentblatt 92/34**

(84) Benannte Vertragsstaaten :
**DE ES FR GB IT**

(56) Entgegenhaltungen :
**DE-A- 2 158 638**
**DE-A- 2 222 427**
**DE-C- 3 420 419**
**GB-A- 1 160 749**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Pälmer, Reinhard**
**Schauinslandstrasse 5**
**W-7533 Tiefenbronn 3 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 337 071 B1

## Beschreibung

Die Erfindung betrifft eine Klappe für eine Be- oder Entlüftungsöffnung an einem Kraftfahrzeug gemäß dem Oberbegriff des Anspruchs 1.

Aus der DE-OS 34 20 419 ist eine Klappe für eine Be- oder Entlüftungsöffnung an einem Kraftfahrzeug bekannt, wobei die Klappe über ein Filmgelenkscharnier mit dem angrenzenden Trägerteil verbunden ist. Gespritzte Filmgelenkscharniere weisen im allgemeinen den Nachteil auf, daß sie ein relativ hohes Biegewiderstandsmoment besitzen, so daß zur Betätigung der Klappe relativ große Kräfte erforderlich sind.

Aufgabe der Erfindung ist es, ein Scharnier zwischen einem Trägerteil und einer Klappe so auszubilden, daß bei einfachem Aufbau die Betätigungskräfte für diese Klappe reduziert werden.

Erfindungsgemäß wird dies durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Verwendung eines dünnwandigen Folien- oder Gewebestreifens aus thermoplastischem Werkstoff ein im Aufbau einfaches Scharnier für eine Klappe geschaffen wird, wobei die Betätigungskräfte für diese Klappe gegenüber einem Filmgelenkscharnier wesentlich reduziert werden. Aus diesem Grunde eignet sich ein derartiges Scharnier insbesondere für eine stauluftbetätigte Klappe.

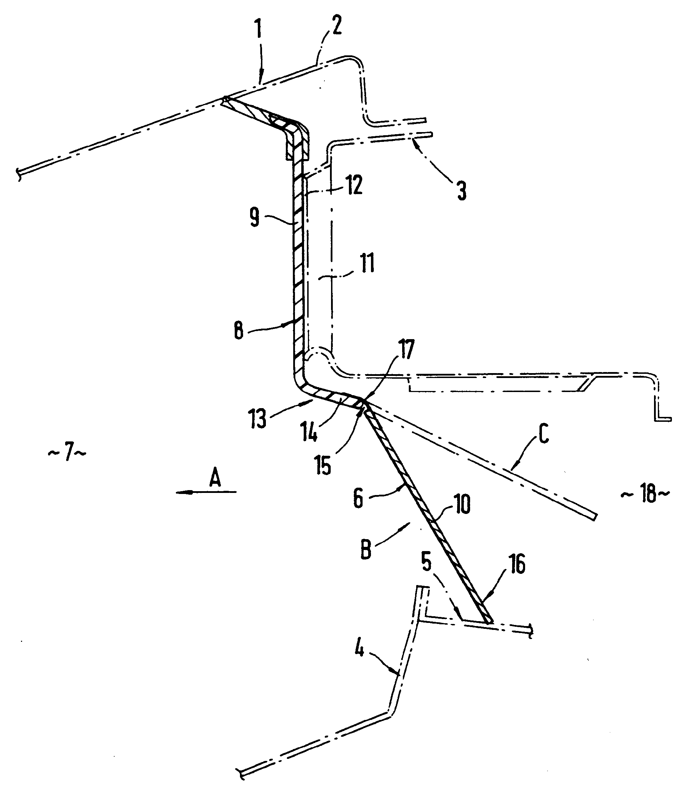

Ein Ausführungsbeispiel der Erfindung ist in der Zeichnung dargestellt und wird im folgenden näher erläutert.

Die Fig. zeigt einen Vertikalschnitt durch eine Klappe für eine Be- oder Entlüftungsöffnung an einem Kraftfahrzeug.

Die Fig. zeigt einen Teilbereich eines Aufbaus 1 eines Kraftfahrzeuges, der im dargestellten Bereich durch ein bugseitig angeordnetes, feststehendes Abschlußteil 2 und einen darunterliegenden Deckschloßquerträger 3 gebildet wird. Unterhalb des Deckelschloßquerträgers 3 verläuft mit vertikalem Abstand ein Kühler 4, wobei zwischen Deckelschloßquerträger 3 und dem oberen Rand 5 des Kühlers 4 eine Be- oder Entlüftungsöffnung 6 vorgesehen ist. In Fahrtrichtung A gesehen ist in dem Raum 7 vor dem Deckelschloßquerträger 3 ein nicht näher dargestellter Luftfilter für eine Brennkraftmaschine vorgesehen. Damit im Stop-and-Go-Verkehr sowie bei einem Ampelstop keine durch den Kühler 4 erwärmte Luft durch die Be- oder Entlüftungsöffnung 6 zum Luftfilter gelangen kann, ist ein Abschottungselement 8 vorgesehen, das sich aus einem Trägerteil 9 und einer gelenkig mit diesem verbundenen Klappe 10 zusammensetzt.

Das vorzugsweise aus Kunststoff gefertigte Trägerteil 9 verschließt örtlich am Deckelschloßquerträger 3 vorgesehene Schlitzöffnungen 11 und ist durch Schrauben, Kleben, Klipsen oder dergleichen mit einer vertikal ausgebildeten Wand 12 des Deckelschloßquerträgers 3 verbunden.

Das Trägerteil 9 weist bei 13 einen schräg nach hinten abfallenden Bereich 14 auf, der über ein Scharnier 15 mit dem oberen Rand der Klappe 10 gelenkig verbunden ist.

Bei stehendem Fahrzeug verschließt die Klappe 10 aufgrund ihres Gewichts die Be- oder Entlüftungsöffnung 6 (Schließstellung B), so daß keine durch den Kühler 4 erwärmte Luft zum Luftfilter gelangen kann, was ein Verschlucken der Brennkraftmaschine bzw. eine ungenügende Gasannahme zur Folge hätte. Ein unteres Ende 16 der Klappe 10 liegt in der Schließstellung B am oberen Rand 5 des Kühlers 4 an. Im Fahrbetrieb herrscht im Bereich des Luftfilters je nach der gefahrenen Geschwindigkeit ein bestimmter Staudruck, der die Klappe 10 selbsttätig nach oben in eine Öffnungstellung C bewegt. Bei geöffneter Klappe 10 strömt ausreichend Luft durch die Be- oder Entlüftungsöffnung 6 durch den Motorraum 18 hindurch zur Brennkraftmaschine.

Das Scharnier 15 zwischen dem Trägerteil 9 und der Klappe 10 wird durch einen dünnwandigen Folien- oder Gewebestreifen 17 aus thermoplastischem Werkstoff gebildet, der einerseits mit der Klappe 10 und andererseits mit dem Trägerteil 9 verbunden ist, wobei die dem Scharnier 15 zugekehrten Endbereiche von Klappe 10 und Trägerteil 9 mit geringem Abstand zueinander verlaufen. Der Folien- oder Gewebestreifen 17 kann durch Schweißen, Kleben, Klemmen oder dergleichen mit der Klappe 9 und dem Trägerteil 10 verbunden sein.

Im Ausführungsbeispiel ist ein etwa 0,2 mm dicker Folien- oder Gewebestreifen 17 aus Polypropylen vorgesehen, der durch HF-Schweißen mit den in Fahrtrichtung A gesehen hintenliegenden Flächen von Trägerteil 9 und Klappe 10 verbunden ist. Die sich über einen wesentlichen Teil der Breite des Fahrzeuges erstreckende und etwa rechtwinkelig ausgebildete Klappe 10 ist aus Kunststoff hergestellt.

Der Folien- oder Gewebestreifen 17 erstreckt sich über die gesamte Breite der Klappe 10 bzw. der Öffnung 6 des Aufbaus 1.

Ein derartiges Scharnier 15 eignet sich für Be- und Entlüftungsklappen im Heizungs- und Klimabereich und im besonderen für stauluftbetätigte Klappen 10 zum Zwecke der Motorraumbe- und -entlüftung von Kraftfahrzeugen. Selbstverständlich ist ein derartiges Scharnier 15 auch für fremdbetätigte Klappen 10 anwendbar.

2

EP 0 337 071 B1

**Patentansprüche**

1. Klappe für eine Be- oder Entlüftungsöffnung an einem Kraftfahrzeug, wobei die Klappe über ein Scharnier mit einem angrenzenden, feststehenden Trägerteil verbunden ist, dadurch gekennzeichnet, daß als Scharnier (15) ein dünnwandiger etwa 0,2 mm dicker Folien- oder Gewebestreifen (17) aus thermoplastischem Werkstoff dient, der einerseits mit der Klappe (10) und andererseits mit dem Trägerteil (9) verbunden ist, wobei die dem Scharnier (15) zugekehrten Endbereiche von Klappe (10) und Trägerteil (9) mit geringem Abstand zueinander verlaufen.

2. Klappe nach Anspruch 1, dadurch gekennzeichnet, daß der Folien- oder Gewebestreifen (17) durch Schweißen, Kleben, Klemmen oder dergleichen an der Klappe (10) und am Trägerteil (9) befestigt ist.

3. Klappe nach Anspruch 1, dadurch gekennzeichnet, daß ein obenliegender, etwa vertikal ausgerichteter Rand der Klappe (10) über den Folien- oder Gewebestreifen (17) mit dem darüberliegend angeordneten Trägerteil (9) verbunden ist.

4. Klappe nach Anspruch 1, dadurch gekennzeichnet, daß der Folien- oder Gewebestreifen (17) aus Polypropylen gefertigt ist.

5. Klappe nach Anspruch 1, dadurch gekennzeichnet, daß die Klappe (10) zwischen einem Motorraum (18) und einem in Fahrtrichtung (A) gesehen, weiter vorneliegenden, einen Luftfilter aufweisenden Raum (7) vorgesehen ist, wobei die Klappe (10) bei stehendem Fahrzeug geschlossen und im Fahrbetrieb durch die Stauluft selbsttätig geöffnet wird.

6. Klappe nach Anspruch 1, dadurch gekennzeichnet, daß das Trägerteil (9) aus Kunststoff hergestellt ist.


**Claims**

1. A flap for a ventilation or air-removal opening on a motor vehicle, the flap being connected to an adjacent stationary support part by way of a hinge, characterized in that the hinge (15) is in the form of a thin-walled foil or fabric strip (17) of thermoplastic material about 0·2 mm thick, connected at one end to the flap (10) and at the other end to the support part (9), wherein the end regions of the flap (10) and the support part (9) facing the hinge (15) extend at a short distance apart from each other.

2. A flap according to Claim 1, characterized in that the foil or fabric strip (17) is secured to the flap (10) and to the support part (9) by welding, adhesion, clamping or the like.

3. A flap according to Claim 1, characterized in that an upper edge of the flap (10) orientated substantially vertically is connected by way of the foil or fabric strip (17) to the support part (9) lying thereabove.

4. A flap according to Claim 1, characterized in that the foil or fabric strip (17) is produced from polypropylene.

5. A flap according to Claim 1, characterized in that the flap (10) is provided between an engine space (18) and a space (7) lying further forward as viewed in the direction of travel (A) and comprising an air filter, the flap (10) being closed when the vehicle is stationary and being opened automatically by the ram air during travel.

6. A flap according to Claim 1, characterized in that the support part (9) is produced from plastics material.


**Revendications**

1. Volet destiné à une ouverture d'arrivée ou d'évacuation d'air d'un véhicule automobile, le volet étant assemblé par une charnière avec un élément de support fixe, adjacent, caractérisé en ce qu'on utilise comme charnière (15) une bande mince de feuille ou de tissu (17), de 0,2 mm d'épaisseur environ, en matière thermoplastique qui est reliée d'une part au volet (10) et d'autre part à l'élément de support (9), les zones terminales, tournées vers la charnière (15), du volet (10) et de l'élément de support (9) étant faiblement espacées les unes des autres.

2. Volet selon la revendication 1, caractérisé en ce que la bande de feuille ou de tissu (17) est fixée sur le volet (10) et sur l'élément de support (9) par soudage, collage, serrage ou similaire.

3. Volet selon la revendication 1, caractérisé en ce qu'un bord supérieur, orienté à peu près verticalement du volet (10), est assemblé à l'élément de support (9) situé au-dessus, par la bande de feuille ou de tissu (17).

4. Volet selon la revendication 1, caractérisé en ce que la bande de feuille ou de tissu (17) est en polypropylène.

5. Volet selon la revendication 1, caractérisé en ce que le volet (10) est prévu entre une enceinte de moteur (18) et un volume (7), situé plus à l'avant, vu dans le sens de la marche (A), comportant un filtre à air, le volet (10) étant fermé à l'arrêt du véhicule et s'ouvrant automatiquement pendant la marche sous l'effet de la pression de l'air.

6. Volet selon la revendication 1, caractérisé en ce que l'élément de support (9) est en matière plastique.

~7~

~18~